# EUROPÄISCHE PATENTANMELDUNG

(11) **EP 0 635 442 A1**
(43) Veröffentlichungstag der Anmeldung: **25.01.1995**
(21) Anmeldenummer: 94105231.8
(22) Anmeldetag: 02.04.1994
(51) Int. Cl.: B65G 47/61, B65G 19/02

(54) **Einhängevorrichtung für einen Hängeförderer**

(30) Priorität: 21.07.1993 DE 4324426
(71) Anmelder: DÜRKOPP ADLER AKTIENGESELLSCHAFT, D-33719 Bielefeld (DE)
(72) Erfinder: Schneuing, Ralf, D-33649 Bielefeld (DE); Janzen, Paul, D-33609 Bielefeld (DE)
(74) Vertreter: Rehmann, Klaus-Thorsten, Dipl.-Ing.

(57) **Zusammenfassung**

Es wird eine Einhängevorrichtung für einen Hängeförderer zur Aufnahme des Hakens (14) eines einzigen Kleiderbügels (15) vorgeschlagen, die zum Freigeben, bzw. Abwerfen des Kleiderbügels (15) zu öffnen ist, und aus einem rahmenförmigen Grundkörper (1) und einer hierin schwenkbar befestigten Klappe (4) besteht, wobei der rahmenförmige Grundkörper (1) in seinem hinteren Bereich einen den Abwurf des Hakens (14) zulassenden Spalt (2) aufweist. Mit einer solchen Einhängevorrichtung ist es möglich, auch bei hoher Fördergeschwindigkeit, Kleiderbügel (15) von beiden Seiten aufzugeben.

## Beschreibung

Die Erfindung betrifft eine Einhängevorrichtung für einen Hängeförderer nach dem Oberbegriff des Anspruchs 1.

Eine solche Einhängevorrichtung ist in der DE-C1-39 09 002 offenbart. Eine Vielzahl solcher Einhängevorrichtungen sind an der Antriebskette des Hängeförderers befestigt und dienen beispielsweise zur Aufnahme eines Kleiderbügels an seinem Haken, um die auf ihm hängenden Bekleidungsstücke mit dem Förderer an einen bestimmten Ablageplatz zu transportieren.

Üblicherweise werden die Einhängevorrichtungen an einer Aufgabestation, die seitlich der Förderstrecke angeordnet ist, vorbeigeführt und an der Aufgabestation wird jeweils ein Bügel selbsttätig in die Einhängevorrichtung übergeben. An der für das Kleidungsstück bestimmten Stelle wird die Einhängevorrichtung geöffnet und der Bügel abgeworfen oder anderweitig übergeben.

Beim Einschleusen der Bekleidungsstücke in einen Kreisförderer müssen diese schon vor Ankunft der Einhängevorrichtung an der Übergabestation in Übernahmeposition sein. Die Vereinigung von Kleiderbügel und Einhängevorrichtung kann nur zu einem bestimmten Zeitpunkt erfolgen. Bezogen auf die Fahrtrichtung ist eine sichere Beladung nur von vorn möglich. Daraus folgt, daß der Kleiderbügel mit hoher Geschwindigkeit in die Warteposition katapultiert werden muß und zu berücksichtigen ist, daß er nicht mit bereits in dem Hängeförderer umlaufenden Transportgütern kollidiert.

Weil das Einschleusen nur in einem eng begrenzten Zeitraum möglich ist, müssen die Bügel, um trotzdem eine Parkposition vor der für sie zuständigen Einhängevorrichtung zu erreichen, auf eine erheblich höhere Geschwindigkeit als die Geschwindigkeit der Schleppkette beschleunigt werden, um anschließend dann abrupt abgebremst zu werden.

Die starken Beschleunigungen führen zum Verschleiß der Aufgabestation sowie zum Herausspringen der Bügel aus der Einhängevorrichtung oder dazu, daß die auf dem Bügel hängenden Kleidungsstücke herunterfallen.

Darüberhinaus ist die bekannte Einhängevorrichtung parallel zur Transportrichtung einseitig verschlossen, so daß eine Aufgabe von Kleiderbügeln nur einseitig erfolgen kann.

Der Erfindung liegt die Aufgabe zugrunde, die Einhängevorrichtung so auszubilden, daß eine beidseitige Aufgabe von Kleiderbügelhaken möglich ist und sie so fortzubilden, daß auch bei höheren Geschwindigkeiten eine sichere Übergabe möglich ist.

Die Lösung der Aufgabe erfolgt durch die kennzeichnenden Merkmale des Anspruchs 1. Weiterbildungen der Erfindung sind den Unteransprüchen entnehmbar.

Durch die rahmenförmige Ausgestaltung des Grundkörpers können in die Einhängevorrichtung von beiden Seiten die Bügelhaken aufgegeben werden. Durch den bezogen auf die Transportrichtung im hinteren Bereich vorgesehenen schmalen Spalt, der zum Abwurf des Hakens dient, ist der Rahmen nahezu verschlossen, so daß eine hohe Stabilität gegeben ist.

Die raumsparende Rahmenkonstruktion gestattet ein automatisches Handling auch bei sehr kleinen Hakenösen und kurzen Bügelhaken.

Wenn die Länge des Grundkörpers wesentlich größer ist als dessen Breite, benötigt die Einhängevorrichtung eine entsprechend lange Zeit, um die Übergabestelle zu passieren. Somit steht mehr Zeit für die Übergabe des Kleiderbügels zur Verfügung.

Je länger der den Bügelhaken bei der Übergabe fangende Teil des Grundkörpers ist, um so größer kann der Übergabezeitpunkt toleriert werden. Hinter der Übergabestation ist dann eine Abstreifvorrichtung vorzusehen, die den noch nicht in seiner Transportstellung befindlichen Bügelhaken in diese bewegt. Dies kann beispielsweise durch beidseitig zum unteren Teil des Grundkörpers verlaufende Bürsten erfolgen, die den Bügelhaken vor die im hinteren Teil des Grundkörpers angeordnete Klappe streifen. Denkbar ist aber auch, hinter der Übergabestation eine Steigungsstrecke vorzusehen, so daß die Bügelhaken vor die Klappe rutschen.

Durch die im hinteren Teil des Grundkörpers vorgesehene schlitzförmige Ausnehmung ist sowohl die Begrenzung der geöffneten Stellung der Klappe als auch die Begrenzung für die verschlossene Klappe möglich. Diese Ausnehmung kann als Anschlagfläche für entsprechend an der Klappe vorzusehene Ansätze dienen.

Anhand einer Zeichnung soll die Erfindung nachfolgend näher beschrieben werden. Es zeigt:

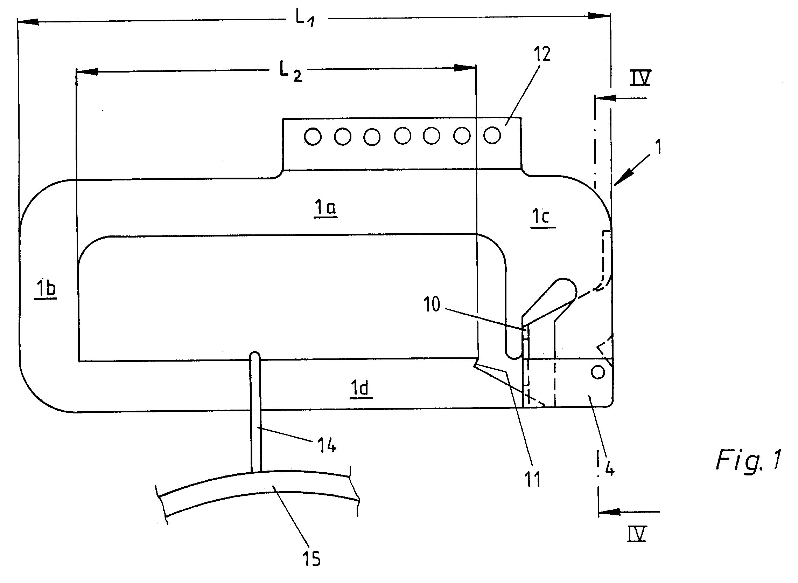

- Figur 1: die Einhängevorrichtung mit gerade aufgegebenem Kleiderbügel,

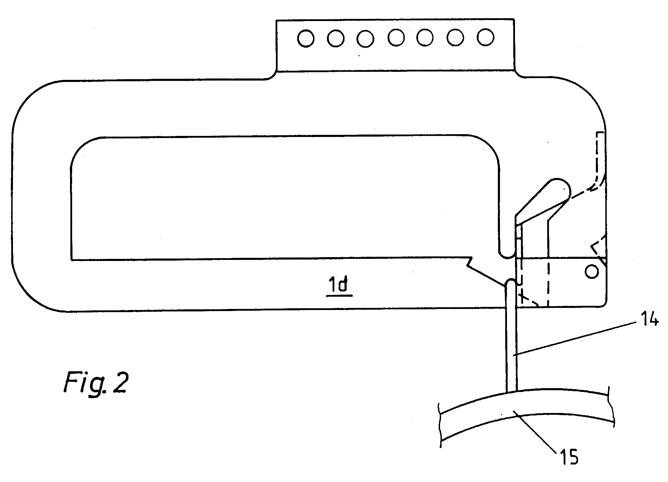

- Figur 2: die Einhängevorrichtung nach Figur 1 mit in die Transportposition verbrachten Kleiderbügel,

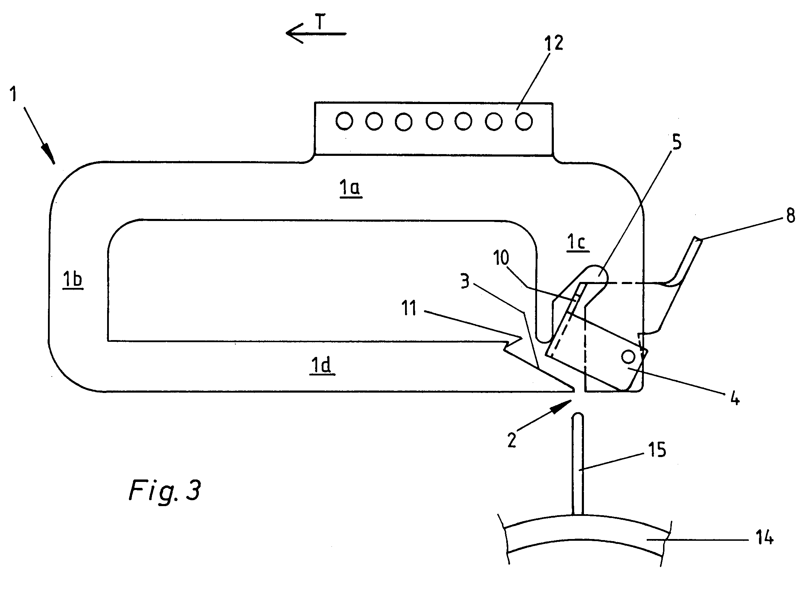

- Figur 3: den Abwurf des Kleiderbügels aus der Einhängevorrichtung und

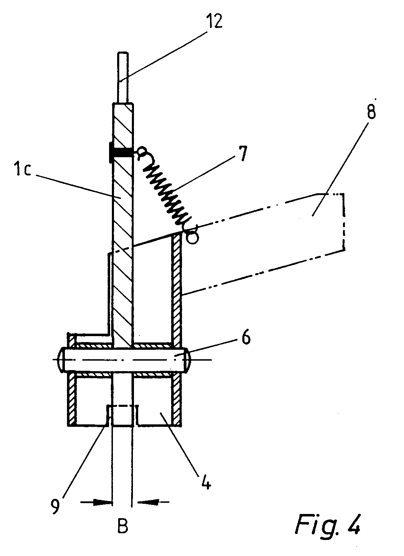

- Figur 4: den Schnitt entlang der Linie IV-IV nach Figur 1

Die Einhängevorrichtung besteht aus dem rahmenförmig ausgebildeten Grundkörper 1, der sich aus dem oberen Teil 1a, dem vorderen Teil 1b, dem hinteren Teil 1c und dem unteren Teil 1d zusammensetzt. Dieser so gebildete Rahmen ist nur von dem zum Abwurf des Bügelhakens 14 bzw. des Bügels 15 dienenden Spalt 2 unterbrochen. Die Spaltbreite ist so gewählt, daß der Bügelhaken von der am unteren Teil 1d ausgebildeten Schräge 3 sicher abgleiten und anschließend ausfallen kann, ohne sich zu verklemmen.

Am hinteren Teil 1c ist die Klappe 4 über einen Lagerstift 6 schwenkbar befestigt. Der vordere Teil der Klappe läuft bei der Schwenkbewegung in einer Ausnehmung 5. Die vertikal verlaufende Ausnehmung 5 mündet in ihrem unteren Bereich in den Spalt 2 und endet in ihrem oberen Bereich gegenüber der Vertikalen in einem nach hinten abgewinkelten Verlauf. Seitlich an der Klappe 4 ist ein Flügel 8 vorgesehen, der als Angriffsfläche für eine -nicht dargestellte- die Klappe 4 öffnende Vorrichtung dient. Am vorderen stirnseitigen Ende der Klappe 4 ist ein Ansatz 10 angeordnet, der als Anschlag gegen die durch die Ausnehmung 5 gebildete Seitenkante am hinteren Teil 1c dient. Dieser Ansatz 10 begrenzt die voll geöffnete und die verschlossene Stellung der Klappe 4. Desweiteren weist die Klappe 4 eine rechteckige Ausnehmung 9 auf, die bei verschlossener Klappe 4 über der Schräge 3 liegt, ohne diese zu berühren.

Zum Verschließen der Klappe 4 ist am Flügel 8 und am Grundkörper 1 eine Zugfeder 7 angelenkt. Am oberen Teil 1a des Grundkörpers 1 ist eine Befestigungsschnittstelle 12 vorgesehen, die so ausgestaltet ist, daß sie in bestehende Befestigungsvorrichtungen an der Förderkette eingreifen kann.

Der Übergang des unteren Teils 1d zum vorderen Teil 1b des Grundkörpers 1 erfolgt in der Innenseite durch einen rechten Winkel.

Hierdurch wird bewirkt, daß eine möglichst lange Strecke L₂ zur Verfügung steht, um den Bügelhaken 14 in die Einhängevorrichtung zu übergeben.

Wie auf der Zeichnung deutlich erkennbar ist, ist die Länge L₁ wesentlich größer als die Breite B des Grundkörpers 1. In einem Ausführungsbeispiel wurde eine Länge L₁ von 200 mm und eine Breite von 5 mm gewählt, was gute Ergebnisse erbrachte.

Je größer die innere Länge L₂ des unteren Teiles 1d gewählt wird, umso länger ist die Zeitspanne, die zur Übergabe des Kleiderbügels 15 verbleibt. Der Kleiderbügel 15 wird von einer hier nicht näher dargestellten Übergabevorrichtung in die Einhängevorrichtung übergeben, wenn und solange sie die Übergabestation passiert. Je nach Übergabetoleranz fällt der Bügel 15 bzw. der Bügelhaken 14 irgendwo auf die horizontal verlaufende Oberseite des unteren Teiles 1d. Eine in Transportrichtung T hinter der Übergabestation angeordnete, hier ebenfalls nicht dargestellte, ortsfeste Abstreifvorrichtung erfaßt den Bügelhaken 14 und schiebt ihn infolge des Weitertransportes der Einhängevorrichtung bis vor die Schräge 3, von wo aus er vor die verschlossene Klappe 4 in seine Transportposition rutscht.

Der am Übergang von der Horizontalkante am unteren Teil 1d zur Schräge 3 vorgesehene Absatz 11 verhindert in an sich bekannter Weise, daß der Bügelhaken 14 aus seiner Transportstellung herausgedrückt werden kann, und eine sichere Abgabe an der vorgesehenen Stelle nicht mehr möglich wäre.

## Patentansprüche

1. Einhängevorrichtung für einen Hängeförderer zur Aufnahme des Hakens (14) eines einzigen Kleiderbügels (15), die zum Freigeben bzw. Abwerfen des Kleiderbügels (15) zu öffnen ist, und aus einem Grundkörper (1) und einer damit um eine rechtwinklig zu Transportrichtung verlaufende Achse schwenkbar befestigten Klappe (4) besteht, wobei der Haken (14) des Kleiderbügels (15) während des Transports auf einer an dem Grundkörper (1) ausgebildeten Schräge (3) aufliegt und sich gegen die zu öffnende Klappe (4) abstützt, **dadurch gekennzeichnet, daß** der Grundkörper (1) rahmenförmig, einen den Abwurf des Hakens (14) zulassenden, bezogen auf die Transportrichtung (T) im hinteren Bereich vorgesehenen Spalt (2) aufweisend, ausgebildet ist.

2. Einhängevorrichtung nach Anspruch 1, **dadurch gekennzeichnet, daß** die Länge (L₁) des Grundkörpers (1) mindestens um den Faktor 10 größer ist als dessen Breite (B).

3. Einhängevorrichtung nach Anspruch 1, **dadurch gekennzeichnet, daß** die Länge (L₂) des den Haken (15) bei der Übergabe fangenden Teils (1d) des Grundkörpers (1) mindestens um den Faktor 10 größer ist als dessen Breite (B).

4. Einhängevorrichtung nach Anspruch 1, **dadurch gekennzeichnet, daß** der Spalt (2) im unteren Teil (1d) des Grundkörpers (1) vorgesehen ist.

5. Einhängevorrichtung nach Anspruch 1, **dadurch gekennzeichnet, daß** der hintere Teil (1c) eine sich in vertikaler Richtung erstreckende schlitzförmige Ausnehmung (5) aufweist, die zur Begrenzung der vollgeöffneten Stellung der Klappe (4) dient.

6. Einhängevorrichtung nach Anspruch 1, **dadurch gekennzeichnet, daß** bezogen auf die Schräge (3) ein langer horizontal verlaufender Bereich am unteren Teil (1d) vorgesehen ist.

7. Einhängevorrichtung nach Anspruch 1, **dadurch gekennzeichnet, daß** die Klappe (4) einen Ansatz (10) aufweist, der bei geschlossener Klappe (4) an der Innenseite der Ausnehmung (5) anliegt.

8. Einhängevorrichtung nach Anspruch 7, **dadurch gekennzeichnet, daß** der Ansatz (10) eine Berührung der Klappe (4) mit der Schräge (3) verhindert.

9. Einhängevorrichtung nach Anspruch 5, **dadurch gekennzeichnet, daß** die Ausnehmung (5) in den Spalt (2) mündet.

10. Einhängevorrichtung nach Anspruch 9, **dadurch gekennzeichnet, daß** die Ausnehmung (5) zunächst parallel zu den Außenseiten des hinteren Teiles (1c) des Grundkörpers (1) verläuft und in Höhe des Ansatzes (10) der Klappe (4) nach hinten gewinkelt endet.

11. Einhängevorrichtung nach Anspruch 1, **dadurch gekennzeichnet, daß** der innere Übergang vom unteren Teil (1d) zum vorderen Teil (1b) des Grundkörpers (1) rechtwinklig erfolgt.
